# EUROPEAN PATENT SPECIFICATION

(11) **EP 2 317 725 B1**
(45) Date of publication and mention of the grant of the patent: **12.09.2012**
(21) Application number: 11155537.1
(22) Date of filing: 01.04.2005
(51) Int. Cl.: H04L 29/06

(54) **Method and apparatus for initiating IMS based communications**
Verfahren und Vorrichtung zur Einleitung von IMS-basierten Kommunikationen
Procédé et appareil permettant d'établir des communications reposant sur un système IMS

(43) Date of publication of application: 04.05.2011
(62) Divisional of application: 05729545.3
(73) Proprietor: Telefonaktiebolaget L M Ericsson (Publ), 164 83 Stockholm (SE)
(72) Inventor: Terrill, Stephen, 28691 Villanueva de la Cañada (Madrid) (ES); Przybysz, Hubert, 126 37 Hägersten (SE)
(74) Representative: Sjöberg, Mats Hakan

(56) References cited:
- US-A1- 2004 184 452
- "Digital cellular telecommunications system (Phase 2+); Universal Mobile Telecommunications System (UMTS); IP Multimedia Subsystem (IMS); Stage 2 (3GPP TS 23.228 version 6.9.0 Release 6); ETSI TS 123 228", ETSI STANDARDS, LIS, SOPHIA ANTIPOLIS CEDEX, FRANCE, vol. 3-SA2, no. V6.9.0, 1 March 2005 (2005-03-01), XP014027532, ISSN: 0000-0001
- ERICSSON: "S-CSCF re-assignment", 3GPP DRAFT; S2-023311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bangkok, Thailand; 20021106, 6 November 2002 (2002-11-06), XP050241944, [retrieved on 2002-11-06]

## Description

### Field of the Invention

The present invention relates to a method and apparatus for initiating IP Multimedia Subsystem (IMS) based communications and in particular for initiating communications for users that are not registered with the IMS.

### Background to the Invention

IP Multimedia (IPMM) services provide a dynamic combination of voice, video, messaging, data, etc. within the same session. By growing the numbers of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below.

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Release 5 and Release 6). IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

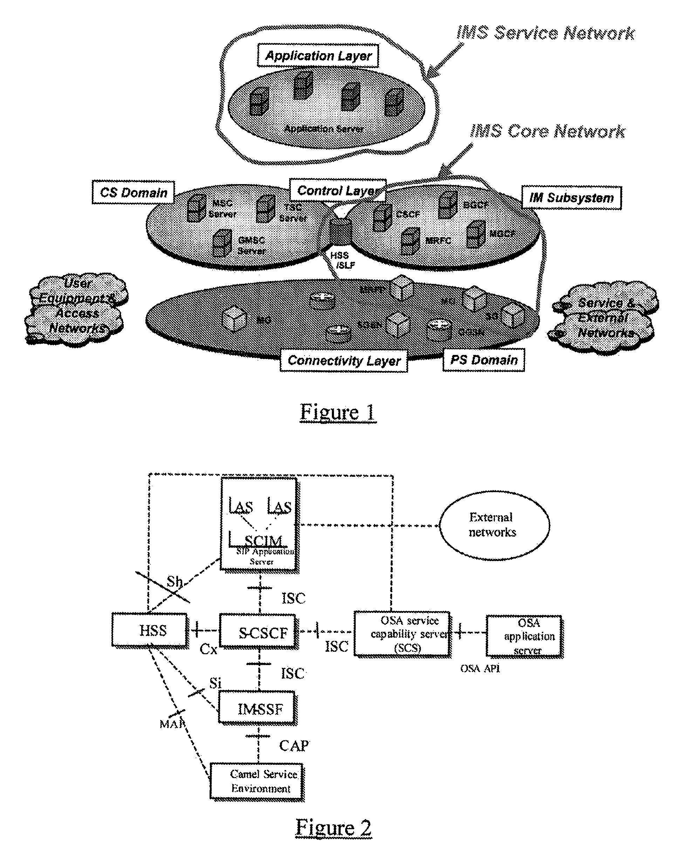

Figure 1 illustrates schematically how the IMS fits into the mobile network architecture in the case of a GPRS/PS access network. Call/Session Control Functions (CSCFs) operate as SIP proxies with the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if a S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

Within the IMS service network, application servers (ASs) are provided for implementing IMS service functionality. Whilst it was originally envisaged that ASs would operate as "slaves" to the IMS CSCFs, responding to requests delegated by the S-CSCFs, this need not be the case and indeed it is now expected that ASs may have interfaces to external (i.e. non-3GPP) networks, and may receive an internal stimulus to perform an action (e.g. a timer expiry). Figure 2 illustrates the IMS Service Control (ISC) interface between an AS and an S-CSCF, as well as other interfaces within the IMS. Although the AS in Figure 2 is shown as having only a single interface to an S-CSCF it will be appreciated that in practice the ISC interface will extend across a communication network to which many (or all) of the CSCF servers of a given operator's network are connected, allowing an AS to communicate with all of these CSCFs. [Other entities illustrated in Figure 1 will be well known to those of skill in the art.]

A further interface (Ut) exists between the AS and the user terminal (TS23.002) although this is not shown in the Figure. The Ut interface enables the user to manage information related to his or her services, e.g. creation and assignment of Public Service Identities, management of authorisation policies that are used for example by "presence" services, conference policy management, etc.

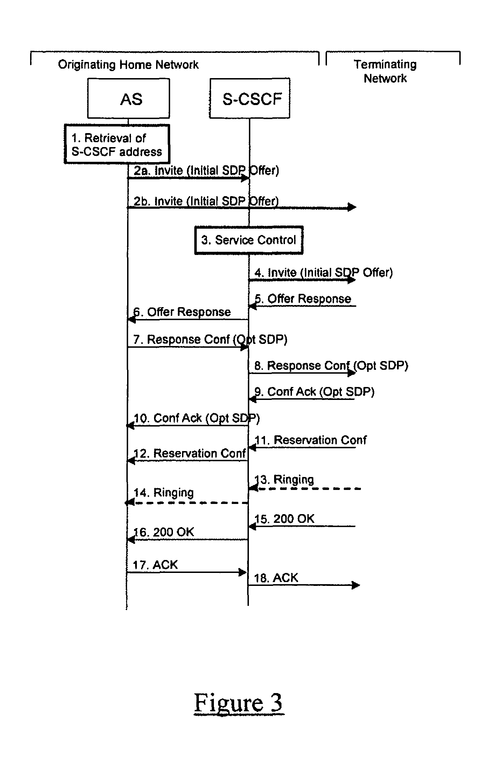

The current IMS architecture allows for an AS to initiate an IMS session in response to the receipt by the AS of an appropriate request over an external interface. One might for example envisage that an IMS session request is sent to the AS over an HTTP interface, where a user initiates the sending of a request by accessing a web page on the Internet. In this case, upon receipt of the session request, the AS will first contact a Home Subscriber Server (HSS) of the initiating user to determine whether or not the user is already registered with the IMS. The AS sends to the HSS a SIP identity generated for the user and which the HSS can use to determine whether or not the user is registered. If so, the HSS will send to the AS the identity of the S-CSCF already allocated to the user. The AS will then forward a SIP INVITE to the identified S-CSCF, and the session set-up procedure will continue as illustrated in Figure 3. An example scenario where this situation might arise is where a 3GPP mobile subscriber is registered with the IMS, and the subscriber then logs on, via a home PC, to a web page and requests an IMS session via that channel.

If it is the case that the user is not registered already with the IMS, and this is reported to the AS by the HSS, the request cannot be processed. TS.228 specifically states that *"If the AS could not acquire a S-CSCF address for the Public User identify, the AS shall not initiate a session on behalf of the user".* 3GPP Change Request S2-023311 introduces new requirements in TS 23.228 relating to the re-assignment of a S-CSCF due to changes in the capabilities of the S-CSCF when originally assigned

It will be appreciated that a similar problem arises where the stimulus for establishing an IMS session is generated internally, within the AS. For example, one can envisage a scenario where the AS has been requested to perform an update of a user's status on a presence server at a requested time. As in the case of an externally originating service, the current standards will allow the AS to initiate the require IMS session only if the user in question is registered with the IMS.

Whilst the discussion above relates to a user that is assumed to be a user possessing a public user identity, the user may be an application, i.e. possessing a public service identity.

### Summary

It is recognised that users may well want to access IMS services even when they are not already registered to the IMS, and in particular where the means that they are using to initiate the IMS communication request does not facilitate IMS registration.

According to a first aspect of the present invention there is provided a method of operating an Application Sever in order to initiate an IP Multimedia Subsystem communication for a user that is not registered *a priori* with the IP Multimedia Subsystem, the method comprising:
receiving a communication request from said user via an interface to an external network, or receiving an internally or externally generated stimulus requiring the establishment of an IP Multimedia Subsystem communication;
allocating a Serving Call/State Control Function to the user; and
sending a Session Initiation Protocol request to the allocated Serving Call/State Control Function.

According to a second aspect of the present invention there is provided a method of operating an Application Sever in order to initiate an IP Multimedia Subsystem communication for a user that is not registered a *priori* with the IP Multimedia Subsystem the method comprising:
receiving a communication request from said user via an interface to an external network, or receiving an internally or externally generated stimulus requiring the establishment of an IP Multimedia Subsystem communication;
sending a Session Initiation Protocol request to a Call/State Control Function.

The Session Initiation Protocol request is sent to a Call/State Control Function in order that the Call/State Control Function can allocate a Serving Call/State Control Function to the user.

The Application Server may send the Session Initiation Protocol request to an Interrogating CSCF. The Application Server may be configured with a designated Interrogating CSCF to which it will send a Session Initiation Protocol request that relates to an unregistered user.

Alternatively, the Application Server may send the Session Initiation Protocol request to a Serving CSCF. The Application Server may identify a Serving CSCF to which it will send the Session Initiation Protocol request based upon historical data relating to the user.

According to a third aspect of the present invention there is provided a method of operating an Interrogating Call/State Control Function in order to initiate an IP Multimedia Subsystem communication for a user that is not registered a *priori* with the IP Multimedia Subsystem, the method comprising:
receiving an originating communication request associated with said unregistered user from an Application Server;
allocating a Serving Call/State Control Function to the unregistered user; and
sending a Session Initiation Protocol request to the allocated Serving Call/State Control Function.

According to a fourth aspect of the present invention there is provided a method of operating a Serving Call/State Control Function in order to initiate an IP Multimedia Subsystem communication for a user that is not registered *a priori* with the IP Multimedia Subsystem, the method comprising:
receiving an originating communication request associated with said unregistered user from an Application Server;
allocating a Serving Call/State Control Function to the unregistered user; and
if the allocated Serving Call/State Control Function is a Serving Call/State Control Function other than itself, sending a Session Initiation Protocol request to the allocated Serving Call/State Control Function.

According to the relevant standards, the allocated Serving Call/State Control Function receives a user identifier specific profile from the Home Subscriber Server. This profile should include support for unregistered originating calls.

The term "communication" as used here encompasses both session establishment procedures and non-session establishment procedures including for example simple SIP message exchanges.

### Brief Description of the Drawings

Figure 1 illustrates schematically the integration of an IP Multimedia Subsystem into a 3G mobile communications system;
Figure 2 illustrates schematically certain entities of the IP Multimedia Subsystem including an Application Server and a Serving Call/State Control Function;
Figure 3 is a signalling diagram illustrating signalling associated with the initiation of an IP Multimedia Subsystem session by an Application Server;
Figure 4 is a signalling diagram illustrating signalling associated with the initiation of an IP Multimedia Subsystem session by an Application Server;
Figure 5 is a signalling diagram illustrating signalling associated with the initiation of an IP Multimedia Subsystem session by an Application Server; and
Figure 6 is a signalling diagram illustrating signalling associated with the initiation of an IP Multimedia Subsystem session by an Application Server.

### Detailed Description of Certain Embodiments

The problem which the present invention addresses is that, according to the state of the art, a Session Initiation Protocol (SIP) Application Server (AS) cannot initiate a SIP request on behalf of an un-registered user within the IP Multimedia Subsystem (IMS) whilst still allowing for the introduction of a Serving Call/State Control Function into the signalling path to provide for originating service analysis. This may however be required in the case that the AS is utilising another (non-SIP) protocol to communicate with the user (e.g. HTTP, SMS, MMS, or other multimedia protocol [or an internal stimulus arises within the AS .e.g. relating to the updating of presence status at a specified time], and the user requires the AS to initiate a SIP request on its behalf.

The basic concept employed here is to allocate a Serving Call/State Control Function (S-CSCF) when the AS determines that a S-CSCF has not already been allocated to the user (e.g. the user is not registered with the IMS). Once an S-CSCF has been allocated, the S-CSCF informs the Home Subscriber Server (HSS) that it is now allocated as the Serving CSCF whilst maintaining the user unregistered status, and the S-CSCF downloads the user profile. The AS session request delivered to the IMS is treated as an originating request. Three alternative embodiments will now be considered, starting from the point where the AS has received an IMS session initiation request over a non-SIP interface. [Other possibilities for initiating the process include the generation of an internal stimulus within the AS, e.g. as a result of the user "programming" the

AS via the Ut interface, and the receipt of an external stimulus from a source other than the user.]

### S-CSCF allocation performed by Application Server

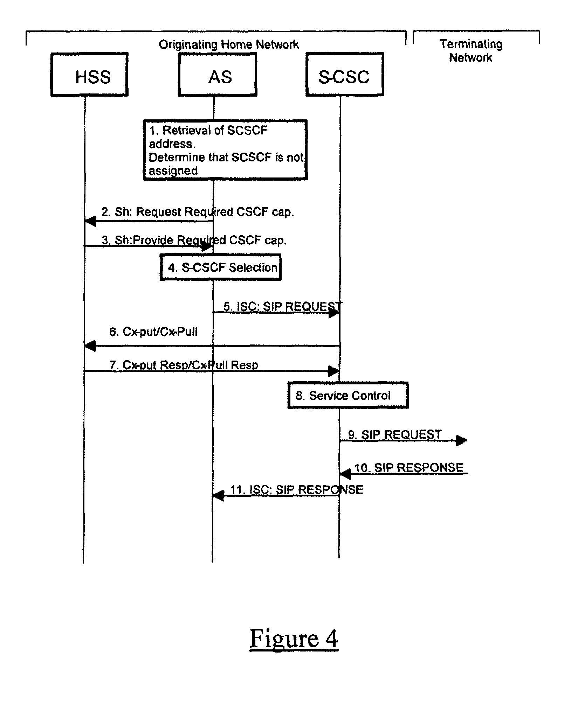

The signalling flow associated with this first embodiment is illustrated in Figure 4, where the process steps are as follows:
1. The AS attempts to retrieve the S-CSCF address for the user by contacting the Home Subscriber Server (HSS) over the Sh interface (Figure 1), sending a SIP identity of the user, generated on behalf of the user, to the HSS. The AS determines that the user is unregistered and that an S-CSCF has not been allocated to the user.
2. The AS requests the required S-CSCF capabilities from the HSS.
3. The HSS returns the required S-CSCF capabilities to the AS over the Sh interface. This functionality is new, as currently S-CSCF capabilities can only be transferred over the Cx interface.
4. The AS performs S-CSCF selection according to some predefined criteria, details of which are not relevant here. (Currently this functionality resides in the I-CSCF.)
5. The AS generates a SIP request (e.g. a SIP INVITE), including a user identity (e.g. sip:username@operator.com). The SIP request is sent to the selected S-CSCF over the ISC interface. [The IP address of the AS is identified to the S-CSCF in the IP header.]
6. The S-CSCF retrieves the user profile from the HSS and informs the HSS that this is now the S-CSCF allocated to the user, whilst maintaining the user unregistered state in the HSS. The S-CSCF records the mapping between the allocated SIP identity and the IP address of the AS.
7. The HSS returns the user profile to the S-CSCF. The subscriber profile may now include originating unregistered service profile information, as well as originating registered, terminating registered, and terminating unregistered service profile information.
8. The S-CSCF performs any service control based on the received user profile (e.g. linking to a further AS), and records the mapping between the allocated SIP identity and the IP address of the AS. Service control may involve, for example, utilising screening filters to control user access to IMS services.
9. The SIP request is forwarded to the appropriate destination.
10. A SIP response is received from the destination.
11. The SIP response is forwarded to the AS. This establishes the SIP session.

### S-CSCF allocation performed by I-CSCF

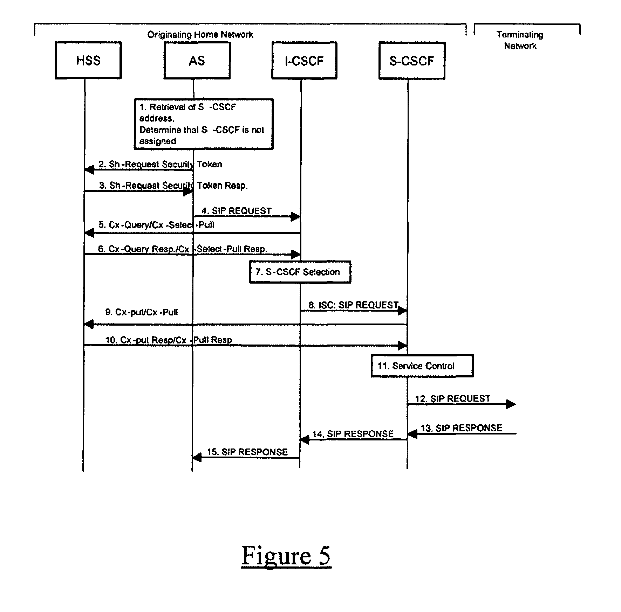

The signalling flow associated with this second embodiment is illustrated in Figure 5, where the process steps are as follows:
1. The AS attempts to retrieve the S-CSCF address for the user from the HSS. The AS determines that the user is unregistered and that an S-CSCF has not been allocated to the user as described above.
2. The AS requests a security token from the HSS. This is required in order for the allocated S-CSCF (see below) to confirm that the request is valid. Without this security mechanism there is a risk that another SIP entity (e.g. a registered SIP user) can send a bogus session initiation request to an S-CSCF, and that the S-CSCF will be unable to distinguish this bogus request from a valid request sent to it by an AS. Whilst some identifier is included in the request to identify the request as originating at an AS, this is an identity which can be copied and can thus pose a security threat.
3. The HSS replies to the AS with a security token. The HSS should authenticate the AS and should authorise the AS to act on behalf of the user prior to generating the security token.
4. The AS sends a SIP request, including the security token (and the user identity and the AS's IP address), to a designated I-CSCF.
5. The I-CSCF performs a Cx-query and Cx-select-pull exchange with the HSS to obtain the required S-CSCF capabilities.
6. The HSS responds to the Cx-query and Cx-select-pull, providing the required S-CSCF capabilities.
7. The I-CSCF performs S-CSCF selection using the predefined criteria.
8. The SIP request is forwarded from the I-CSCF to the selected S-CSCF, again with the security token. The I-CSCF should not Record Route this request as it does not need to remain in the SIP signalling path after the establishment of the session.
9. The S-CSCF retrieves the user profile from the HSS and informs the HSS that it is now the S-CSCF for the user whilst maintaining the user unregistered state. The security token is included in the Cx-put/Cx-pull requests. If the validity of the token is confirmed by the HSS, then the S-CSCF knows that the SIP request has come from a valid AS. Again, this profile may include originating unregistered profile information.
10. The HSS returns the user profile to the S-CSCF (assuming that the token is valid).
11. The S-CSCF performs any required service control based on the received use profile.
12. The SIP request is forwarded to the destination.
13.A SIP response is received from the destination.
14. The SIP response is forwarded to the I-CSCF.
15. The SIP response is forwarded to the AS.
[SIP specifies that the SIP response must traverse the same nodes traversed by the SIP request. Hence, the S-CSCF does not send the response directly to the AS.]

### S-CSCF allocation performed by S-CSCF

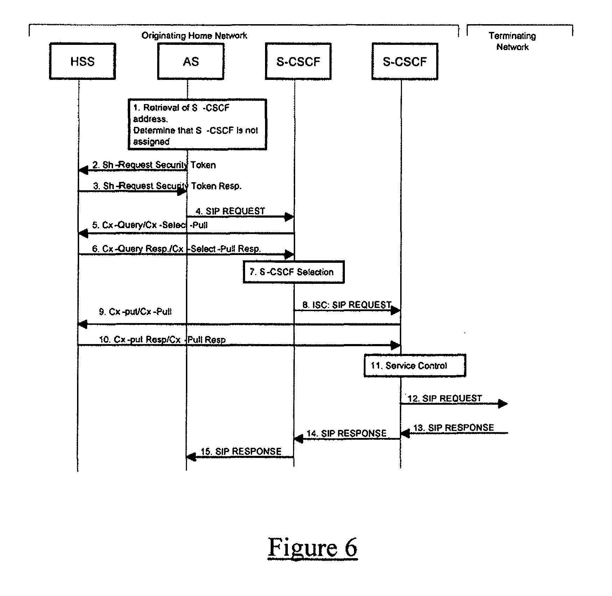

The signalling flow associated with this third embodiment is illustrated in Figure 6, where the process steps are as follows:
1. The AS attempts to retrieve the S-CSCF address for the user. The AS determines that the user is unregistered and that an S-CSCF has not been allocated to the user.
2. The AS requests a security token from the HSS. This is required in order for the S-CSCF (see below) to verify that the request has come from a valid AS.
3. The HSS replies with a security token. The HSS should authenticate the AS and should authorise the AS to act on behalf of the user prior to generating the security token.
4. The AS sends the SIP request, including the security token, to a suitable S-CSCF, e.g. the AS may make an educated guess as to the most likely S-CSCF based upon historical data for the user in question.
5. The S-CSCF performs a Cx-query and Cx-select-pull exchange with the HSS to obtain the required S-CSCF capabilities.
6. The HSS responds to the Cx-query and Cx-select-pull, providing the required S-CSCF capabilities to the S-CSCF. This is new functionality, as previously the required S-CSCF capabilities are only included in the Cx procedures to the I-CSCF.
7. The S-CSCF performs S-CSCF selection. It may select itself if it has the required S-CSCF capabilities.
8. The SIP request is forwarded from the allocating S-CSCF to the allocated S-CSCF together with the security token. [The Selecting S-CSCF should not record route the request.]
9. The allocated S-CSCF retrieves the user profile from the HSS and informs the HSS that it is now the S-CSCF for the user whilst maintaining the user unregistered status. The security token is included in the Cx-put/Cx-pull requests. If the token is validated by the HSS for that user, then the S-CSCF knows the SIP request has come from a valid AS.
10. The HSS returns the user profile to the allocated S-CSCF, assuming that the token is valid. Again, this profile includes originating unregistered profile information.
11. The S-CSCF performs any required service control based on the received user profile.
12. The SIP request is forwarded to the appropriate destination.
13. A SIP response is received from the destination.
14. The SIP response is forwarded to the first S-CSCF.
15. The SIP response is forwarded to the AS.

While the procedures detailed above relate to an AS initiating a SIP session with a user associated with a Public User identifier (PUI), these are also applicable to an AS initiating a SIP session with a "user" associated with a Public Service identifier (PSI). The PSI is described in 3GPP TS 23.228.

It will be appreciated by the person of skill in the art that various modifications may be made to the above described embodiments without departing from the scope of the present invention. In an example modification, the security token mechanism described above with reference to the second and third embodiments may also be employed with the first embodiment in order to allow the HSS (on behalf of the allocated S-CSCF) to validate the AS from which a SIP request has been received.

It will be further appreciated by the person of skill in the art that the use of a security token issued by the HSS may be utilised to secure IMS-related communications other than those related to providing IMS services to non-registered users. For example, a security token issued by the HSS may be used generally to provide a better means of security for signalling sent from the S-CSCF to an AS (i.e. to secure all ISC signalling). In particular, when the S-CSCF receives a user profile from the HSS (i.e. at user SIP registration), it will also receives a security token. Upon receipt of this token by the AS, the AS must verify that security token is valid (by communicating with the HSS over the Sh interface). The security token would probably have a limited lifetime.

## Claims

1. A method of operating an Application Sever in order to initiate an IP Multimedia Subsystem communication for a user that is not registered a *priori* with the IP Multimedia Subsystem, the method comprising:
receiving a communication request from said user via an interface to an external network, or receiving an internally or externally generated stimulus requiring the establishment of an IP Multimedia Subsystem communication;
allocating a Serving Call/State Control Function to the user; and
sending a Session Initiation Protocol request to the allocated Serving Call/State Control Function.

2. A method of operating an Application Sever in order to initiate an IP Multimedia Subsystem communication for a user that is not registered a *priori* with the IP Multimedia Subsystem, the method comprising:
receiving a communication request from said user via an interface to an external network, or receiving an internally or externally generated stimulus requiring the establishment of an IP Multimedia Subsystem communication;
sending a Session Initiation Protocol request to a Call/State Control Function.

3. A method according to claim 2, wherein the Application Server sends the Session Initiation Protocol request to an Interrogating CSCF.

4. A method as claimed in claim 3, wherein the Application Server is configured with a designated Interrogating CSCF to which it will send a Session Initiation Protocol request that relates to an unregistered user.

5. A method according to claim 2, wherein the Application Server sends the Session Initiation Protocol request to a Serving CSCF.

6. A method according to claim 5, wherein the Application Server identifies a Serving CSCF to which it will send the Session Initiation Protocol request based upon historical data relating to the user.

7. A method of operating an Interrogating Call/State Control Function in order to initiate an IP Multimedia Subsystem communication for a user that is not registered a *priori* with the IP Multimedia Subsystem, the method comprising:
receiving an originating communication request associated with said unregistered user from an Application Server;
allocating a Serving Call/State Control Function to the unregistered user; and
sending a Session Initiation Protocol request to the allocated Serving Call/State Control Function.

8. A method of operating a Serving Call/State Control Function in order to initiate an IP Multimedia Subsystem communication for a user that is not registered *a priori* with the IP Multimedia Subsystem, the method comprising:
receiving an originating communication request associated with said unregistered user from an Application Server;
allocating a Serving Call/State Control Function to the unregistered user; and
if the allocated Serving Call/State Control Function is a Serving Call/State Control Function other than itself, sending a Session Initiation Protocol request to the allocated Serving Call/State Control Function.

## Patentansprüche

1. Verfahren zum Betreiben eines Applikationsservers, um eine IP-Multimedia-Teilsystem-Kommunikation für einen Benutzer einzuleiten, der nicht von vornherein bei dem IP-Multimedia-Teilsystem registriert ist, wobei das Verfahren umfasst:
Empfangen einer Kommunikationsanfbrdemng von dem Benutzer über eine Schnittstelle zu einem externen Netz oder Empfangen eines intern oder extern erzeugten Stimulus, der die Einrichtung einer IP-Multimedia-Teilssystem-Kommunikation erfordert,
Zugteilen einer Serving-Call/State-Steuerungsfunktion an den Benutzer; und
Senden einer Sitzungsaufbauprotokoll-Anforderung an die zugeteilte Serving-Call/State-Steuerungsfunktion.

2. Verfahren zum Betreiben eines Applikationsservers, um eine IP-Multimedia-Teilsystem-Kommunikation für einen Benutzer einzuleiten, der nicht von vornherein bei dem IP-Multimedia-Teilsystem registriert ist, wobei das Verfahren umfasst:
Empfangen einer Kommunikationsanforderung von dem Benutzer über eine Schnittstelle zu einem externen Netz oder Empfangen eines intern oder extrem erzeugten Stimulus, der die Einrichtung einer IP-Multimedia-Teilsystem-Kommunikation anfordert;
Senden einer Sitzungsaufbauprotokoll-Anforderung an einen Call/State Steuerungsfunktion.

3. Verfahren nach Anspruch 2, wobei der Applikationsserver die Sitzungsaufbauprotokoll-Anforderung an eine Interrogating-CSCF sendet.

4. Verfahren nach Anspruch 3, wobei der Applikationsserver mit einer bestimmten Interrogating-CSCF konfiguriert ist, an die er eine Sitzungsaufbauprotokoll-Anforderung sendet, die sich auf einen nicht registrierten Benutzer besieht.

5. Verfahren nach Anspruch 2, wobei der Applikationsserver die Sitzungsaufbauprotokoll-Anforderung an eine Serving-CSCF sendet.

6. Verfahren nach Anspruch 5, wobei der Applikationsserver eine Serving-CSCF, an die er die Sitzungsaufbauprotokoll-Anforderung zu senden, vorhat, auf der Grundlage von Stammdaten bezüglich des Benutzers erkennt.

7. Verfahren zum Betreiben einer Interrogating-Call/State-Steuerungsfunktion, um eine IP-Multimedia-Teilsystem-Kommunikation für einen Benutzer einzuleiten, der nicht von vornherein bei dem IP-Multimedia-Teilsystem registriert ist, wobei das Verfahren umfasst:
Empfangen einer dem nicht registrierten Benutzer zugeordneten abgehenden Kommunikationsanforderung von einem Applikationsserver;
Zuteilen einer Serving-Call/State-Steuerungsfunktion an den nicht registrierten Benutzer; und
Senden einer Sitzungsaufbauprotokoll-Anforderung an die zugeteilte Serving-Call/State-Steuerungsfunktion.

8. Verfahren zum Betreiben einer Serving-Call/State-Steuerungsfunktion, um eine IP-Multimedia-Teilsystem-Kommunikation für einen Benutzer einzuleiten, der nicht von vornherein bei dem IP-Multimedia-Teilsystem registriert ist, wobei das Verfahren umfasst:
Empfangen einer dem nicht registrierten Benutzer zugeordneten abgehenden Kommunikationsanforderung von einem Applikationsserver;
Zuteilen einer Serving-Call/State-Steuerungsfunktion an den nicht registrierten Benutzer; und
wenn die zugeteilte Serving-Call/State-Steuerungsfunktion eine andere Serving-Call/State-Steuerungsfunktion als sie selbst ist, Senden einer Sitzungsaufbauprotokoll-Anforderung an die zugeteilte Serving-Call/State-Steuerungsfunktion.

## Revendications

1. Procédé destiné à exploiter un serveur d'application en vue d'initier une communication; de sous-système multimédia IP pour un utilisateur qui n'est pas enregistré *a priori* auprès du sous-système multimédia IP, le procédé comprenant les étapes ci-dessous consistant à :
recevoir une demande de communication en provenance dudit utilisateur par l'intermédiaire d'une interface au niveau d'un réseau externe, ou recevoir un stimulus généré de manière interne ou externe nécessitant l'établissement d'une communication de sous-système multimédia IP ;
affecter une fonction de commande d'état/appel de service à l'utilisateur ; et
envoyer une demande de protocole d'ouverture de session à la fonction de commande d'état/appel de service affectée.

2. Procédé destiné à exploiter un serveur d'application en vue d'initier une communication de sous-système multimédia IP pour un utilisateur qui n'est pas enregistré *a priori* auprès du sous-système multimédia IP, le procédé comprenant les étapes ci-dessous consistant à :
recevoir une demande de communication en provenance dudit utilisateur par l'intermédiaire d'une interface au niveau d'un réseau externe, ou recevoir un stimulus généré de manière interne ou externe nécessitant l'établissement d'une communication de sous-système multimédia IP ;
envoyer une demande de protocole d'ouverture de session à une fonction de commande d'état/appel.

3. Procédé selon la revendication 2, dans lequel le serveur d'application envoie la demande de protocole d'ouverture de session à une fonction CSCF d'interrogation.

4. Procédé selon la revendication 3, dans lequel le serveur d'application est configuré avec une fonction CSCF. d'interrogation désignée à laquelle il enverra une demande de protocole d'ouverture de session connexe à un utilisateur non enregistré.

5. Procédé selon la revendication 2, dans lequel le serveur d'application envoie la demande de protocole d'ouverture de session à une fonction CSCF de service.

6. Procédé selon la revendication 5, dans le serveur d'application identifie une fonction CSCF de service, à laquelle il enverra la demande de protocole d'ouverture de session, sur la base de données historiques connexes à l'utilisateur.

7. Procédé destiné à exploiter une fonction de commande d'état/appel d'interrogation en vue d'initier une communication de sous-système multimédia IP pour un utilisateur qui n'est pas enregistré *a priori* auprès du sous-système multimédia IP, le procédé comprenant les étapes ci-dessous consistant à :
recevoir une demande de communication sortante associée audit utilisateur non enregistré à partir d'un serveur d'application ;
affecter une fonction de commande d'état/appel de service à l'utilisateur non enregistré ; et
envoyer une demande de protocole d'ouverture de session à la fonction de commande d'état/appel de service affectée.

8. Procédé destiné à exploiter une fonction de commande d'état/appel de service en vue d'initier une communication de sous-système multimédia IP pour un utilisateur qui n'est pas enregistré *a priori* auprès du sous-système multimédia IP, le procédé comprenant les étapes ci-dessous consistant à :
recevoir une demande de communication sortante associée audit utilisateur non enregistré à partir d'un serveur d'application ;
affecter une fonction de commande d'état/appel de service à l'utilisateur non enregistré ; et
si la fonction de commande d'état/appel de service affectée est une fonction de commande d'état/appel de service distincte de celle affectée, envoyer une demande de protocole d'ouverture de session à la fonction de commande d'état/appel de service affectée.
